# EUROPEAN PATENT SPECIFICATION

(11) **EP 3 140 946 B1**
(45) Date of publication and mention of the grant of the patent: **12.02.2020**
(21) Application number: 14799990.8
(22) Date of filing: 11.11.2014
(51) Int. Cl.: H04L 5/00, H04W 72/00

(54) **EXPLICIT SIGNALING OF THE PRESENCE OF ACTIVATION CAMMAND FOR FAST ON/OFF FEATURE OF AGGREGATED CARRIERS**
EXPLIZITE SIGNALISIERUNG DER ANWESENHEIT EINES AKTIVIERUNGSBEFEHLS FÜR DIE SCHNELLE (DE-)AKTIVIERUNG VON AGGREGIERTEN TRÄGERN
SIGNALISATION EXPLICITE DE LA PRÉSENCE D'UN COMMANDE DE (DÉ-)ACTIVATION RAPIDE DES PORTEUSES AGRÉGÉES

(30) Priority: 09.05.2014 US 201461990895 P
(43) Date of publication of application: 15.03.2017
(73) Proprietor: Telefonaktiebolaget LM Ericsson (publ), 164 83 Stockholm (SE)
(72) Inventor: LARSSON, Daniel, S-112 18 Stockholm (SE); FALAHATI, Sorour, S-112 29 Stockholm (SE); KOORAPATY, Havish, Saratoga, California 95070 (US)
(74) Representative: Ericsson
(86) International application number: PCT/EP2014/074260
(87) International publication number: WO 2015/169404

(56) References cited:
- ZTE: "Discussion on activation and deactivation MAC CE", 3GPP DRAFT; R2-106330, vol. RAN WG2, 15 November 2010 (2010-11-15), - 19 November 2010 (2010-11-19), XP050492230, USA [retrieved on 2010-11-09]
- QUALCOMM INCORPORATED: "Small cell on/off", 3GPP DRAFT; R1-134617, [Online] vol. RAN WG1, 28 September 2013 (2013-09-28), XP050717702, China Retrieved from the Internet: URL:http://www.3gpp.org/ftp/tsg_ran/WG1_RL 1/TSGR1_74b/Docs/> [retrieved on 2013-09-28]
- QUALCOMM INCORPORATED: "Small cell on/off time reduction", 3GPP DRAFT; R1-140452, [Online] vol. RAN WG1, no. ; 20140210 - 20140214, 10 February 2014 (2014-02-10), - 14 February 2014 (2014-02-14), XP050735988, Czech Republic Retrieved from the Internet: URL:http://www.3gpp.org/ftp/Meetings_3GPP_ SYNC/RAN/RAN1/Docs/> [retrieved on 2014-02-09]

## Description

### Background

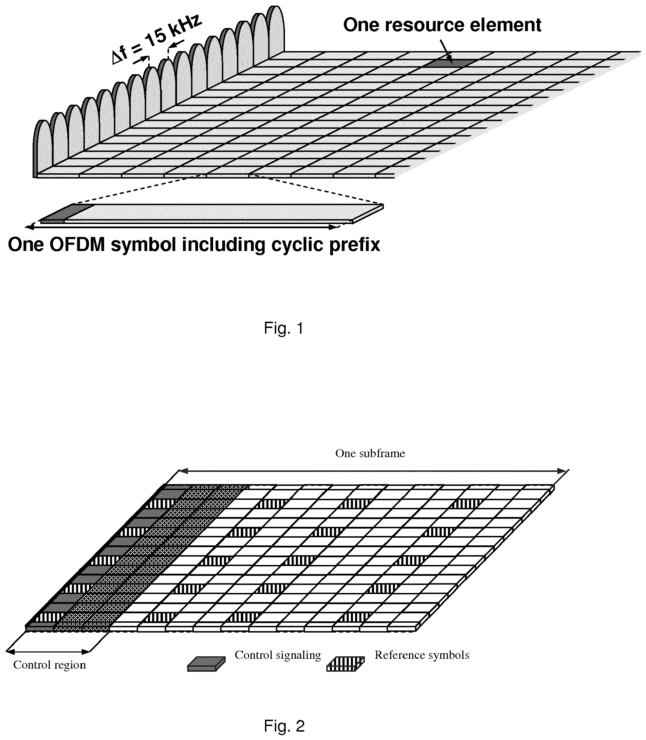

3GPP LTE technology is a mobile broadband wireless communication technology in which transmissions from base stations (referred to as eNodeBs or eNBs) to mobile stations (referred to as user equipment (UE)) are sent using orthogonal frequency division multiplexing (OFDM). OFDM splits the signal into multiple parallel sub-carriers in frequency. The basic unit of transmission in LTE is a resource block (RB) which in its most common configuration consists of 12 subcarriers and 7 OFDM symbols (one slot). A unit of one subcarrier and 1 OFDM symbol is referred to as a resource element (RE) see Fig. 1. Thus, an RB consists of 84 REs. An LTE radio subframe is composed of two slots in time and multiple resource blocks in frequency with the number of RBs determining the bandwidth of the system (see Fig. 2). Furthermore, the two RBs in a subframe that are adjacent in time are denoted as an RB pair. Currently, LTE supports standard bandwidth sizes of 6, 15, 25, 50, 75 and 100 RB pairs. In the time domain, LTE downlink transmissions are organized into radio frames of 10ms, each radio frame consisting of ten equally-sized subframes of length Tsubframe = 1ms. The signal transmitted by the eNB in a downlink (the link carrying transmissions from the eNB to the UE) subframe may be transmitted from multiple antennas and the signal may be received at a UE that has multiple antennas. The radio channel distorts the transmitted signals from the multiple antenna ports. In order to demodulate any transmissions on the downlink, a UE relies on reference symbols (RS) that are transmitted on the downlink. These reference symbols and their position in the time-frequency grid are known to the UE and hence can be used to synchronize to the downlink signal and determine channel estimates by measuring the effect of the radio channel on these symbols. In Rel-11 and prior releases of LTE, there are multiple types of reference symbols. The primary synchronization signal (PSS) and the secondary synchronization signal (SSS) are used for cell search and coarse time and frequency synchronization. The common reference symbols (CRS) are used for channel estimation during demodulation of control and data messages in addition to synchronization. The CRS occur once every subframe. The channel state information reference symbols (CSI-RS) are also used for channel state feedback related to the use of transmission modes that enable UE-specific antenna pre-coding. These transmission modes use the UE-specific demodulation reference symbols (DM-RS) at the time of transmission with the pre-coding at the eNB performed based on the feedback received from and measured by the UE on the CSI-RS. All these reference signals are shown in Fig. 2 over two subframes of duration 1ms each.

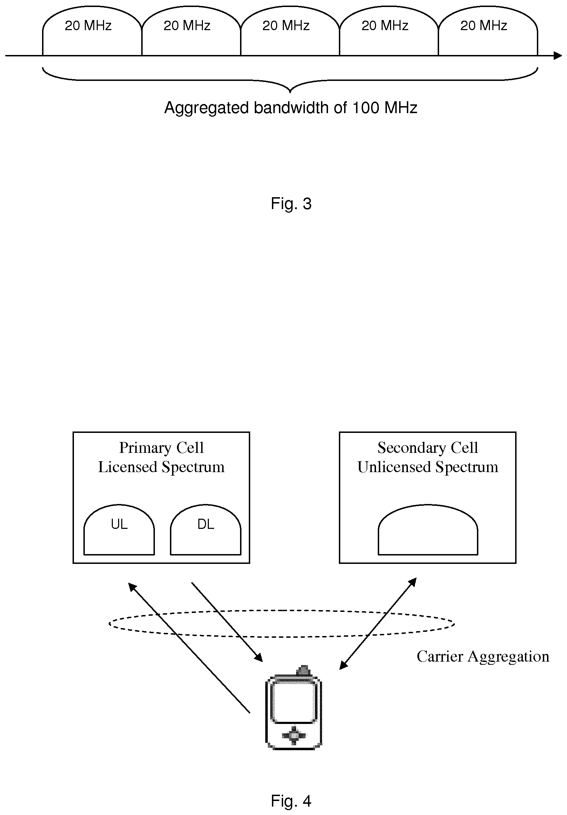

The LTE Rel-10 standard has recently been standardized - also referred to as LTE advanced standard - supporting bandwidths larger than 20MHz. One important requirement on LTE Rel-10 is to assure backward compatibility with LTE Rel-8. This should also include spectrum compatibility. That would imply that an LTE Rel-10 carrier, wider than 20 MHz, should appear as a number of LTE carriers to an LTE Rel-8 terminal. Each such carrier can be referred to as a Component Carrier (CC). Within the context of the present application the term cell may particularly denote a component carrier. In particular for early LTE Rel-10 deployments it can be expected that there will be a smaller number of LTE Rel-10-capable terminals compared to many LTE terminals for lower releases (e.g. Rel.8). Therefore, it is necessary to assure an efficient use of a wide carrier also for legacy terminals, i.e. that it is possible to implement carriers where legacy terminals can be scheduled in all parts of the wideband LTE Rel-10 carrier. The straightforward way to obtain this would be by means of Carrier Aggregation (CA). CA implies that an LTE Rel-10 terminal can receive multiple CC, where the CC have, or at least the possibility to have, the same structure as a Rel-8 carrier. CA is illustrated in Fig. 3 wherein 5 carriers with a bandwidth of 20MHz each are combined to an aggregated bandwidth of 100MHz.

The number of aggregated CC as well as the bandwidth of the individual CC may be different for uplink and downlink. A symmetric configuration refers to the case where the number of CCs in downlink and uplink is the same whereas an asymmetric configuration refers to the case that the number of CCs is different. The number of CCs configured in a cell may be different from the number of CCs seen by a terminal. A terminal may for example support more downlink CCs than uplink CCs, even though the cell is configured with the same number of uplink and downlink CCs.

During initial access a LTE Rel-10 terminal behaves similar to a LTE Rel-8 terminal. Upon successful connection to the network a terminal may - depending on its own capabilities and the network - be configured with additional CCs in the Uplink (UL) and Downlink (DL). Configuration is based on Radio Resource Control (RRC) signaling. Due to the heavy signaling and rather slow speed of RRC signaling it is envisioned that a terminal may be configured with multiple CCs even though not all of them are currently used. If a terminal is configured on multiple CCs this would imply it has to monitor all DL CCs for Physical Downlink Control Channel (PDCCH) and Physical Downlink Shared Channel (PDSCH). This implies a wider receiver bandwidth, higher sampling rates, etc. resulting in high power consumption.

To mitigate above problems, LTE Rel-10 supports activation of CCs on top of configuration. The terminal monitors only configured and activated CCs for PDCCH and PDSCH. Since activation is based on Medium Access Control (MAC) control elements - which are faster than RRC signaling - activation/de-activation can follow the number of CCs that is required to fulfill the current data rate needs. Upon arrival of large data amounts multiple CCs are activated, used for data transmission, and de-activated if not needed anymore. All but one CC - the DL Primary CC (DL PCC) - can be de-activated. Activation provides therefore the possibility to configure multiple CC but only activate them on a need basis. Most of the time a terminal would have one or very few CCs activated resulting in a lower reception bandwidth and thus battery consumption. Scheduling of a CC is done on the PDCCH via downlink assignments. Control information on the PDCCH is formatted as a Downlink Control Information (DCI) message. In Rel-8 a terminal only operates with one DL and one UL CC, the association between DL assignment, UL grants and the corresponding DL and UL CCs is therefore clear.

In LTE Rel-10 two modes of CA needs to be distinguished: The first mode is very similar to the operation of multiple Rel-8 terminals. A DL assignment or UL grant contained in a DCI message transmitted on a CC is either valid for the DL CC itself or for associated (either via cell-specific or UE specific linking) UL CC. A second mode of operation augments a DCI message with the Carrier Indicator Field (CIF). A DCI containing a DL assignment with CIF is valid for that DL CC indicted with CIF and a DCI containing an UL grant with CIF is valid for the indicated UL CC.

DCI messages for downlink assignments contain among others resource block assignment, modulation and coding scheme related parameters, HARQ redundancy version, etc. In addition to those parameters that relate to the actual downlink transmission, most DCI formats for downlink assignments also contain a bit field for Transmit Power Control (TPC) commands. These TPC commands are used to control the uplink power control behavior of the corresponding Physical Uplink Control Channel (PUCCH) that is used to transmit the HARQ feedback.

In Rel-10 LTE, the transmission of PUCCH is mapped onto one specific uplink CC, the UL Primary CC (UL PCC). Terminals only configured with a single DL CC (which is then the DL PCC) and UL CC (which is then the UL PCC) are operating dynamic ACK/NACK on PUCCH according to Rel-8. The first Control Channel Element (CCE) used to transmit PDCCH for the DL assignment determines the dynamic ACK/NACK resource on Rel-8 PUCCH. Since only one DL CC is cell-specifically linked with the UL PCC no PUCCH collisions can occur since all PDCCH are transmitted using different first CCE. Upon reception of DL assignments on a single Secondary CC (SCC) or reception of multiple DL assignments, CA PUCCH should be used. A DL SCC assignment alone is untypical. The eNB scheduler should strive to schedule a single DL CC assignment on the DL PCC and try to de-activate SCCs if not needed. A possible scenario that may occur is that eNB schedules terminal on multiple DL CCs including the PCC. If the terminal misses all but the DL PCC assignment it will use Rel-8 PUCCH instead of CA PUCCH. To detect this error case eNB has to monitor both the Rel-8 PUCCH and the CA PUCCH.

In Rel-10 LTE, the CA PUCCH format is based on the number of configured CC. Configuration of CC is based on RRC signaling. After successful reception/application of the new configuration a confirmation message is sent back making RRC signaling very safe.

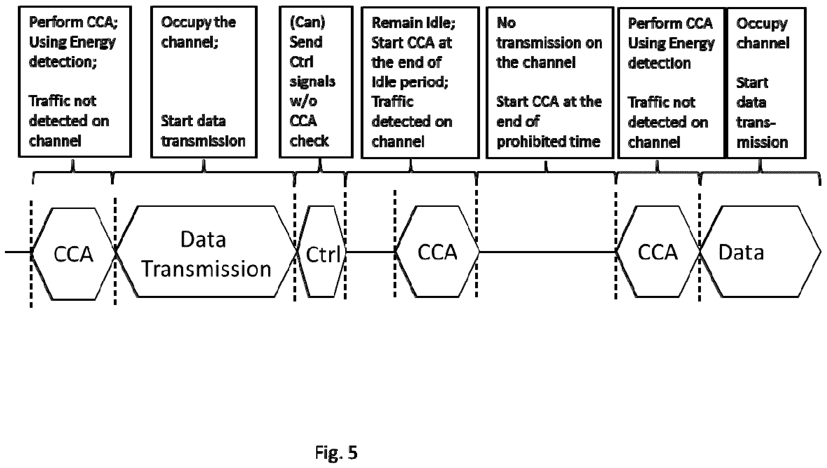

Up to now, the spectrum used by LTE is dedicated to LTE. This has the advantage that LTE system does not need to care about the coexistence issue and the spectrum efficiency can be maximized. However, the spectrum allocated to LTE is limited which cannot meet the ever increasing demand for larger throughput from applications/services. Therefore 3GPP now initiate a new study item, i.e. let LTE work in unlicensed spectrum as well. In unlicensed spectrum, not LTE, but other systems use it as well. Then LTE need to consider the coexistence issue with other system, e.g. Wifi. If LTE work as it is in unlicensed spectrum, then Wifi cannot work at all as Wifi won't transmit once it detects the channel is occupied. Furthermore, one way to utilize the unlicensed spectrum reliably is to defer essential control signals and channels on a licensed carrier. That is, as shown in Fig. 4, a UE is connected to a Primary Cell (PCell) in the licensed band and one or more Secondary Cells (SCells) in the unlicensed band. There are a lot of available spectra in the unlicensed bands, and these bands are today widely used by WLAN. The sharing of the spectrum in Wi-Fi is done by dividing the total bandwidth into a number of channels. In the 2.4 GHz band the channels are typically 20 MHz wide, and there up to 13 channels are defined. These are partially overlapping, and thus will interfere with one another. Typically, three non-overlapping channels are used in the 2.4 GHz band. For the 5 GHz band, many more channels are available as the available bandwidth is much larger. However, with the development of IEEE 802.11n and IEEE 802.11ac, the bandwidth has been increased from 20 MHz to 40, 80, and even 160 MHz. Thus, in particular when the wider bandwidths are used, the number of non-overlapping channels is still rather small. In typical deployments of WLAN, the access points (APs) are allocated such that the used channels, as far as possible, are not overlapping. In practice, this often means that one tries to maximize the distance between APs using the same channel. For channel access CSMA/CA is used. This means that the channel is sensed, and only if the channel is declared as Idle, a transmission is initiated. In case the channel is declared as Busy, the transmission is essentially deferred until the channel is found Idle. When the range of several APs using the same frequency overlap, this means that all transmissions related to one AP might be deferred in case a transmission on the same frequency to or from another AP which is within range can be detected. Effectively, this means that if several APs are within range, they will have to share the channel in time, and the throughput for the individual APs may be severely degraded. A general illustration of the listen before talk mechanism is shown in Fig. 5.

In a 3GPP LTE radio network, dense deployments of cells - which may be small cells - are attractive to increase system capacity. A small cell can also refer to as a component carrier of a carrier aggregation when more than one component carrier is available. However, dense deployments typically have fewer user equipment (UE) connected to each cell and lower resource utilization with higher rates provided when the cells are used. Reference signal structures that are developed for regular deployments with existing systems such as 3GPP LTE may have a density which is too high so that there is a lot of unnecessary interference created when deployments become dense. Further reference signals may be transmitted even when there is no data being sent to the UEs. In order to tackle this problem of unnecessary interference, solutions to turn small cells off when they are not being used are being discussed in 3GPP LTE Rel. 12. The small cell enhancement is e.g. described in 3GPP TR 36.872 V12.1.0. In a "small cells on/off-mode", it is desirable for the transition time between on and off states to be as fast as possible to maximize performance. The cell state may therefore change within milliseconds to tens of milliseconds which is much faster than the time scales corresponding to the dormant mode type of operation standardized in 3GPP LTE RAN1. The small cell on/off feature is - although it is called small cell - not limited to small cells but can also be deployed for any cell power type.

When the small cell layer is configured as a secondary cell (SCell) layer Carrier Aggregation (CA) is by definition supported. The small cell or SCell for CA can be deactivated if no data traffic is needed to be handled by the small cell layer. At the stage when the traffic demand increases from the UE the network judges that the Primary Cell (PCell) cannot handle the increased traffic demand and will then activate the Secondary Cell (SCell) which can be the small cell. However during the whole time if the UE is of a type that does not support small cell on/off-feature or the discovery signal the UE assumes that the deactivated cell to be transmitting CRS. However, in an activated SCell there might be instances that the cell can go off due to e.g. absence of traffic or downlink traffic completion and turns on again if packets arrive. Such a mechanism can trigger the small cells or SCell to turn on or off in a dynamic fashion. In these schemes, the small cells may be turned on/off on subframe level, following criteria such as packet arrival/completion and the need for interference coordination/avoidance in subframe time scales. In other words, at the moment of a packet arrival, the small cell or SCell can be turned on immediately and transmit the packet to a UE, and it can be turned off at the moment of the completion of the packet-transmission. Likewise the small cell can be turned on/off immediately based on the need for interference coordination and/or avoidance. In principle it would be possible to modify the CA activation/deactivation scheme so that the UE could assume that the cell is off if the SCell is deactivated. However, there is a delay associated with activating a SCell that makes this an unattractive operation as the gains with turning off the cells will be very low or it will be lost. It is then not possible to track the traffic demand by the UE. Tracking the traffic demand in the UE is however possible to do with the small cell on/off feature as it can switch a sub frame from off-to-on on a subframe to subframe basis in its fastest form.

In order to increase the flexibility and to reduce the feasible time scale for implementing small cell on/off operation the eNB controlling the turned-off small cell has to send a Discovery Signal periodically to support the properties required for enabling Radio Resource Management (RRM) measurements at the UE in order to indicate to the eNB that the cell is good enough to be a serving cell. Further the Discovery signal is used to support Radio Link Measurement (RLM) related procedures to determine the radio link quality and for coarse time/frequency synchronization. The eNB has to send this Discovery Signal periodically (e.g. once each 80ms or 160ms, etc.). This Discovery Signal can be utilized when the cell is operating small cell on/off in order for the UE to be able to find such a cell (i.e. to perform cell search).

The document ZTE: "Discussion on activation and deactivation MAC CE", 3GPP DRAFT; R2-106330, vol. RAN WG2, 15 - 19 November 2010,USA, discloses that the Ci field in the MAC CE should contain the status of the SCell and that the UE will decide on the activation and deactivation based on the current status of the SCells and the status in the MAC CE.

The document QUALCOMM INCORPORATED: "Small cell on/off", 3GPP DRAFT; R1-134617,vol. RAN WG1, 28 September 2013,China, considers hyper-dense small cell deployments and discusses the mechanism for efficient small cell operation. One conclusion of this discussion is that adaptively disabling instantaneous cell on/off feature at the eNB must ensure backward compatibility of the feature. It is proposed that it should be possible for the eNB to apply cell activation and deactivation procedure in a subframe level.

A UE that does not support the small cell or cell on/off-feature (e.g. a UE according to LTE Rel.8 to LTE Rel.11) assumes that each cell should transmit the CRS periodically. If a cell is using the new introduced on/off-feature (is operating cell on/off) then this cell cannot serve a UE which does not support this feature if the cell has been turned off. If the network decides that this non-supporting UE has to be served by this cell, which is operating in the on/off-mode, then this cell immediately stops operating in the on/off-mode in order to serve the UE which is not supporting the on/off-feature. After this UE left the coverage of this cell the network can decide to turn-on the on/off-mode for this cell again.

Due to the fact that the Discovery Signal and the cell or small cell on/off feature can be operated independently, a UE which is able to support the on/off-mode of cells in a coverage area of at least one eNB is not able to distinguish between a cell which is working in the on/off-mode and a cell which has to support a UE which is not supporting this on/off-mode of cells.

### Summary

It is an object of the present invention to overcome disadvantages in the prior art. This object is achieved by the independent claims.

Aspects of the present invention are provided in the independent claims. Preferred embodiments are provided in the dependent claims.

In one embodiment a method according to claim 1 is provided and is further detailed in the dependent claims referring back to this claim.

In a further embodiment an access node and a method performed thereby are provided according to claims 7 and 8, respectively.

In a further embodiment a user equipment is provided according to claim 9 and further detailed in the dependent claim(s) referring back to this claim.

The present invention also concerns a computer program according to claim 11 and further detailed in the dependent claim(s) referring back to this claim. The computer program can be stored on a computer-readable medium. The computer-readable medium can be a permanent or rewritable memory within the user device or the recipient device or located externally. The respective computer program can also be transferred to the user device or recipient device for example via a cable or a wireless link as a sequence of signals.

### Detailed Description

The present invention is defined by the appended claims and limited only by their scope. Any embodiment and/or aspect (of the invention and/or disclosure) referred to in this description and not fully falling within the scope of said appended claims is to be interpreted as an example useful for understanding the present invention.

In the below, for purposes of explanation and not limitation, specific details are set forth in order to provide a thorough understanding of the present invention. It will be apparent to one skilled in the art that the present invention may be practiced in other embodiments that depart from these specific details. For example, although the exemplary embodiments are described in connection with LTE standard terminology to illustrate the present invention, they are equally applicable to other kinds of mobile communication systems. Also, the invention may be practiced in any network to which mobile users may attach. For example, the present invention is applicable to, besides cellular networks, Local Area Networks (LANs), Wireless LANs (WLANs), or similar wireless networks, but also to wireline networks such as, for example, the intranet of a company or the Internet. Although a specific protocol stack is used below to describe the present invention, any other suitable protocol stack may equally be used.

Those skilled in the art will further appreciate that the functions explained herein below may be implemented using hardware circuitry, software means, or a combination thereof. The software means may be in conjunction with a programmed microprocessor or a general purpose computer, using an Application Specific Integrated Circuit (ASIC) and/or Digital Signal Processors (DSPs). It will also be apparent that when the present invention is described as a method, it may also be embodied in a computer processor and a memory coupled to the processor, wherein the memory is encoded with one or more programs that perform the method when executed by the processor.

In some embodiments a more general term "network node" or "access node" is used and it can correspond to any type of radio network node or any network node or access node, which communicates with a UE and/or with another network node. Examples of network nodes are Node B, base station (BS), multi-standard radio (MSR) radio node such as MSR BS, eNode B, network controller, radio network controller (RNC), base station controller (BSC), relay, donor node controlling relay, base transceiver station (BTS), access point (AP), transmission points, transmission nodes, RRU, RRH, nodes in distributed antenna system (DAS), core network node (e.g. MSC, MME etc), O&M, OSS, SON, positioning node (e.g. E-SMLC), MDT etc.

In some embodiments the non-limiting term user equipment (UE) is used and it refers to any type of wireless device communicating with a network node and/or with another UE in a cellular or mobile communication system. Examples of UE are target device, device to device (D2D) UE, machine type UE or UE capable of machine to machine (M2M) communication, PDA, iPADs, Tablets, mobile terminals, smart phone, laptop embedded equipped (LEE), laptop mounted equipment (LME), USB dongles etc.

According to one embodiment a method for a user equipment, UE, in a wireless communication system supporting carrier aggregation is proposed. The UE is configured by the access node with one primary carrier and at least one secondary carrier. The UE is therefore able to communicate over the primary cell and the at least one secondary cell if these cells are active. A carrier in this context can also be a component carrier or cell, wherein an SCell is a secondary cell or component carrier and a PCell is a primary cell or component carrier. The at least one secondary carrier can be dynamically switched on and off by the access node in very short time, referred to as on/off-feature in the following. This very short time basis can be a subframe by subframe basis in accordance with the introduced small cell on/off-feature of 3GPP TR 36.872 V12.1.0. Section 6.1.1.1 of this standard describes an example of the on/off-feature according to the embodiment. Scheme 4 "Ideal, dynamic on/off schemes) describes that the small cells may be turned on/off in subframe level. The detailed description of this scheme is included in section 6.1.1.1.2 of the same standard. This section stated that this scheme follows criteria such as packet arrival/completion and the need for interference coordination/avoidance in subframe time scales. In other words, at the moment of a packet arrival, the small cell can be turned on immediately and transmit the packet to a UE, and it can be turned off at the moment of the completion of the packet. Likewise the small cell can be turned on/off immediately based on the need for interference coordination/avoidance. The embodiment comprises the step of receiving, an indication from the access node indicating whether the on/off-feature is used for the at least one secondary carrier or not. This indication may be received on the primary carrier. The advantage of receiving in the indication on the primary carrier is that the primary carrier or PCell in CA must always be active and therefore can receive commands and indications for SCells in CA, even if these SCells have been turned off.

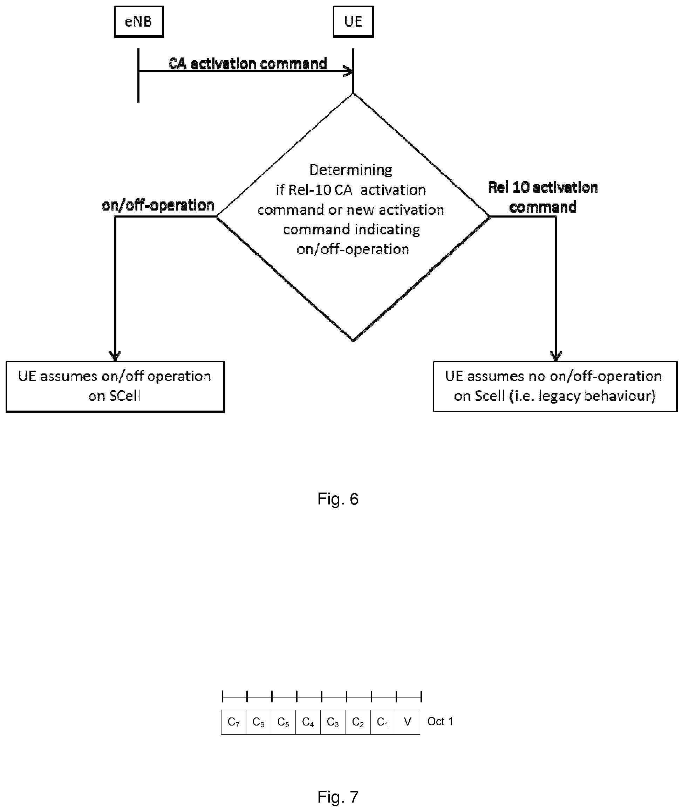

Fig. 6 shows one embodiment of the invention in a flow diagram. The eNB (access node) sends an CA activation command to a UE in a wireless communication system supporting carrier aggregation (like LTE Rel. 12 network). The UE is configured by the eNB with one primary carrier and at least one secondary carrier. The at least one secondary carrier can be dynamically switched on and off by the access node on a subframe by subframe basis. The UE determines if it receives via this activation (or deactivation) command an indicator (new activation command indicating on/off-operation) or if it receives an Rel. 10 CA activation command (on/off-feature not used). If the UE receives such an indicator it assumes the on/off-operation on the SCell or on all SCells and will implement this feature in the communication session with the network. If the UE receives a Rel. 10 activation command which is not based on the on/off-feature then the UE assumes that no on/off-operation on SCell is applicable and behaves legacy (according to the behavior of Rel. 8 - Rel. 11 UEs).

In an embodiment of the invention the on/off-operation mode on an SCell is given by introduction a specific SCell activation command. The activation command indicating small cell on/off on a particular cell is a different command than the CA activation command introduced in LTE Rel-10. The already known CA activation command is used for a configuration of a Carrier aggregation for a specific area. This configuration is a more long-term configuration and e.g. cannot be used on a subframe by subframe basis as the small cell on/off-feature. When the UE receives the SCell activation command, indicating on/off operation, the UE will assume that the cell is operating in the on/off-mode (using the on/off-feature). The activation command is sent by the access node, which can be an eNodeB in a first example as a MAC Control Element in a PDSCH to the UE. It is proposed to use an already existing configuration message with a modified content. 3GPP standard 36.321 Version 12.1.0 (2014-03) discloses under point 6.1.3.8 the Activation/Deactivation MAC Control Element (CE). It has a fixed size and consists of a single octet containing seven C-fields and one R-field. The Activation/Deactivation MAC control element is defined as follows. If there is an SCell configured with SCelllndex i as specified in 3GPP TS 36.331 Version 12.1.0: "Evolved Universal Terrestrial Radio Access (E-UTRA); Radio Resource Control (RRC); Protocol specification", the Ci-field indicates the activation/deactivation status of the SCell with SCelllndex i, else the UE shall ignore the Ci field. The Ci field is set to "1" to indicate that the SCell with SCelllndex i shall be activated. The Ci field is set to "0" to indicate that the SCell with SCelllndex i shall be deactivated. The R-field is a reserved bit, set to "0". It is now proposed to replace the R-field in the MAC CE message with an indicator which indicates the use of the on/off-operation feature for all serving cells (SCells). As an example a new introduced indicator V indicates with a "0" value a CA activation/deactivation command indicating the non-use of the on/off-operation feature for all serving cells. A value of "1" (or set/true) indicates a CA activation/deactivation command indicating the use of the on/off-operation feature for all serving cells. If the new indicator is set to false or "0" then this new indicator comprises the same value as the already existing R-indicator. If the existing CA MAC CE is modified in accordance with this embodiment it is possible for the eNB to operate both the old and new MAC CE message towards the same UE. The structure of the new message is depicted in Fig. 7. If the UE receives the new message with the new indicator it will assume that the cells are operating in an on/off-mode. If it receives the Rel-10 message with the indicator set to "0" (R-indicator) the UE will assume a SCell operation without on/off-mode. This fact can be utilized if it is so that the serving eNB would like to turn off the on/off-operation feature on all its cells because of the presence of UEs that do not support the small cell on/off-operation.

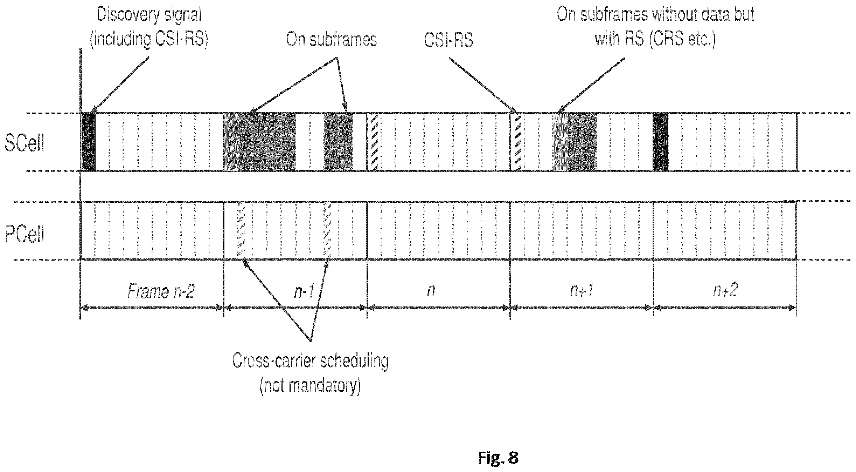

Another example is that the eNB sends the activation command in a Downlink Control Information (DCI) message on PDCCH or (e)PDCCH to the UE. When the UE receives the activation command it first identifies that the activation command indicating activation for a cell that is operating on/off. After this process the UE activates the SCell. Activating the SCell means that the UE can receive PDSCH/PDCCH on that SCell and at same time start to report CSI and SRS for that SCell if the UE is configured to report this. Further when the UE is activated on a SCell operating on/off-operation, the behavior could be defined in a bit different ways. In one example the behavior scheme considered here is a scheme that is based on implicit signaling on whether the SCell is assumed to be on or off. The UE detects whether the cell is on or off based on the detection of the CRS on the SCell (or on the secondary component carrier). Briefly the UE detects the status of the SCell in any subframe by trying to detect the CRS that will be transmitted in any subframe that is on. Both discovery burst and CSI-RS are configured to be transmitted from an "off" cell as well as an "on" cell. Hence the UE is capable of providing updated Cell Quality Indicator (CQI) report when needed. An example is illustrated in Figure 8 with the presence of some subframes where no data is scheduled but CRS and possibly other RS are transmitted. This could be done so as to provide the UE with some additional subframes with RS in order to prepare for data reception in a subsequent subframe.

In principle this scheme can be considered using PDCCH as the indicator where the UE tries to decode PDCCH on the UE search space for the current subframe. However using only PDCCH instead of CRS as the indicator does not provide the additional benefits that CRS based detection facilitates as explained above.

Another example of on/off operation is that some form of indicator or DCI message is signaled on another cell that indicates whether the SCell operating on/off is on or alternatively off. It is further possible to tie the connection to on/off operation to the Discontinuous Reception (DRX) operation of the UE so that the UE assumes that the cell is "off" during DRX and assumes that the cell is "on" during non-DRX, i.e. during on-duration time in the DRX cycle.

In another embodiment it is proposed to construct a new configuration message or MAC CE message for indicating the activation/deactivation for a SCell operating in the on/off-operation mode. With a new configuration message it might be possible to indicate the on/off-operation mode per SCell.

The introduction of an indicator indicating the use of the on/off-operation feature for an SCell or all SCells provides the possibility for the network to quickly switch the UE assumptions between an on/off-operation mode and a non on/off-operation mode. It further provides a tool to indicate to the UE whether or not small cell on/off-operation is applied.

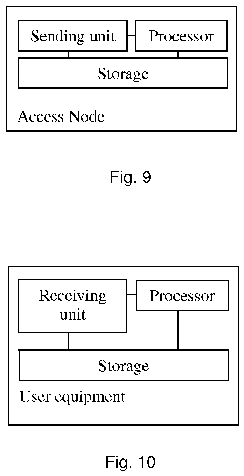

Fig. 9 depicts an embodiment of an access node according to one embodiment of the invention, which can be a eNodeB of an LTE network. The access node supports carrier aggregation and the access node is configuring a user equipment, UE, with one primary carrier and at least one secondary carrier. The at least one secondary carrier can be dynamically switched on and off by the processor of the access node on a subframe by subframe basis, in the following referred to as on/off-feature. The access node comprises a sending unit, adapted to send, on the primary carrier, an indication to the UE, indicating whether the on/off-feature is used for the at least one secondary carrier or not.

Fig. 10 depicts a user equipment (UE) according to one embodiment of the invention configured by an access node of a wireless communication system supporting carrier aggregation with one primary carrier and at least one secondary carrier. The at least one secondary carrier can be dynamically switched on and off by the access node on a subframe by subframe basis, in the following referred to as on/off-feature. The UE comprises a receiving unit, adapted to receive, on the primary carrier, an indication to the UE, indicating whether the on/off-feature is used for the at least one secondary carrier or not. If the UE receives the indication that the on/off-feature can be used for the at least one secondary cell then the UE will switch to a mode in which this secondary cell can be turned on and off on a subframe by subframe base.

Therefore specific signalling between the UE and the access node is needed. If the UE receives the indication that the on/off-feature cannot be used for the at least one secondary cell then the UE will switch to a legacy mode wherein this feature cannot be used. The signalling and behavior of the UE is different to the mode in which the on/off-feature is supported. The UE therefore comprises a Processor which is adapted to process the communication in the different modes.

The depicted storage in the access node and the UE can store some processing steps for being executed because the present invention also concerns computer programs comprising portions of software codes or instructions in order to implement the method as described above when operated by at least one respective processing unit of a user device and a recipient device. The computer program can be stored on a computer-readable medium or storage of Fig. 9 and/or Fig. 10. The computer-readable medium can be a permanent or rewritable memory within the user device or the recipient device or located externally. The respective computer program can also be transferred to the user device or recipient device for example via a cable or a wireless link as a sequence of signals.

It is further referred to a discussion in 3GPP TSG RAN WG1 Meeting #77. which comprises the following issues:
In a shared cell deployment the UE will within a shared cell detect the PSS/SSS (Primary/Secondary Synchronization Signal) of the shared cell. The PSS/SSS is typically transmitted from all transmission points within the shared cell. Further the CRS is also transmitted within the shared cell from all the transmission point. For both the CRS and PSS/SSS they are transmitted using the same PCI (Physical Cell ID) and in a synchronised fashion, hence they will combine over the air. The discovery signal will be used by the UE to detect the different transmission points by having a unique signal being transmitted per transmission point. This unique signal can for example be a CSI-RS. The will report RRM measurement based on the discovery signal measurements per TP and the network can then select which TP the UE is scheduled from by the use of DM-RS. Consequently, the unique signal in the discovery signal per TP needs there for to be co-located with the DM-RS from the same TP. This in order for the network to be able to assess what the long term quality of scheduling the UE from a certain TP is. In shared cell deployments, the unique aspect of the discovery signal that is transmitted from a specific TP should be QCL with the DM-RS from that TP.

Small cell on/off is according the WID supposed to be support for techniques targeting HO, CA activation, dual connectivity (if support) and a new L1 procedure. Common for all approaches are that UE needs to be able to measure the discovery signal prior to operating on the frequency wherein the discovery signals is transmitted. The need the discovery signals fulfils for all the different approaches is that the UE can measure RRM and further have rough synchronisation to the cell from which the discovery signal is transmitted. Common for most of the proposal on how to support small cell on/off is that at the time the UE is scheduled with PDSCH, the cell transmits CRS. How long before the UE transmits CRS difference in the different approach, but the key aspect is that CRS is transmitted. It could also be foreseen for that the cell may at some point also stop operating on/off, this may have an impact for the new L1 procedure. As it could then be a gain with indicating to the UE that now the cell is not operating on/off any longer. This could for example be done by utilising different activation commands on the Scell indicating whether or not the cell is operating on/off (the Scell can be any secondary cell or component carrier). In order for the UE to be able to utilise the fact that it has measured on the discovery signal when the UE receives data on the cell the UE needs to be able to make some assumptions on regarding the antenna ports relations between the discovery signal and the CRS. Consequently the discovery signal need at least to be quasi co-located with CRS in a small cell on/off deployment. In small cell on/off deployment, the discovery signal should be quasi co-located with CRS transmitted from the same cell as the discovery signal
Utilising the QCL framework the UE would should be able to be signalled assistance information indicating whether or not the it can assume that the discovery signalling's being operating in Type A or Type B fashion. The UE is provided assistance information whether it can assume the discovery signal being operated in QCL mode Type A or Type B.

## Claims

1. A method performed by a user equipment, UE, in a wireless communication system supporting carrier aggregation, wherein the UE is configured by an access node with one primary carrier and at least one secondary carrier and wherein the at least one secondary carrier can be dynamically switched on and off by the access node on a subframe by subframe basis via an activation/deactivation indication, in the following referred to as on/off-feature, comprising the step of receiving an indicator from the access node indicating whether the on/off-feature is used for the at least one secondary carrier or not, such that when said indicator indicates that the on/off feature is not used, ignoring the activation/deactivation indication on a subframe by subframe basis for the at least one secondary carrier from the access node.

2. Method according to claim 1, wherein the indicator indicating the on/off-feature for all secondary cells which are configured for the UE by the access node.

3. Method according to claim 1 or 2, wherein the indicator is indicating the on/off-feature for each configured secondary cell separately.

4. Method according to any of the claims 1 to 3, wherein the indicator is a MAC control element.

5. Method according to claim 2, wherein the indicator is comprised in an Activation/Deactivation MAC Control Element as specified in 3GPP standard 36.321 Version 12.1.0.

6. Method according to any of the claims 1 to 3, wherein the indicator is received by the UE from the access node in a Downlink Control Information, DCI, message on a Physical Downlink Control Channel, PDCCH.

7. An access node comprised in a wireless communication system supporting carrier aggregation, wherein the access node is configuring a user equipment, UE, with one primary carrier and at least one secondary carrier and wherein the at least one secondary carrier can be dynamically switched on and off by the access node on a subframe by subframe basis via an activation/deactivation indication, in the following referred to as on/off-feature, comprising a sending unit, adapted to send, on the primary carrier, an indicator to the UE, indicating whether the on/off-feature is used for the at least one secondary carrier or not, such that when said indicator indicates that the on/off feature is not used, instructing the UE to ignore the activation/deactivation indication on a subframe by subframe basis for the at least one secondary carrier from the access node.

8. A method performed by an access node in a wireless communication system supporting carrier aggregation, wherein the access node is configuring a user equipment, UE, with one primary carrier and at least one secondary carrier and wherein the at least one secondary carrier can be dynamically switched on and off by the access node on a subframe by subframe basis via an activation/deactivation indication, in the following referred to as on/off-feature, the method comprising:
sending, on the primary carrier, an indicator to the UE, indicating whether the on/off-feature is used for the at least one secondary carrier or not, such that when said indicator indicates that the on/off feature is not used, instructing the UE to ignore the activation/deactivation indication on a subframe by subframe basis for the at least one secondary carrier from the access node.

9. User equipment, configured by an access node of a wireless communication system supporting carrier aggregation with one primary carrier and at least one secondary carrier, wherein the at least one secondary carrier can be dynamically switched on and off by the access node on a subframe by subframe basis via an activation/deactivation indication, in the following referred to as on/off-feature, comprising a receiving unit, adapted to receive, on the primary carrier, an indicator to the UE, indicating whether the on/off-feature is used for the at least one secondary carrier or not, such that when said indicator indicates that the on/off feature is not used, ignoring the activation/deactivation indication on a subframe by subframe basis for the at least one secondary carrier from the access node.

10. User equipment according to claim 9, adapted to perform at least one of the method steps of claims 2 to 6.

11. Computer program, comprising instructions which, when executed on at least one processor of a user equipment, cause the at least one processor of the user equipment to carry out the method according to any one of the claims 1 to 6.

12. Computer program product comprising a computer program according to claim 11.

13. A computer readable data carrier having stored thereon the computer program of claim 11, wherein the data carrier is one of an electronic signal, optical signal, radio signal, magnetic tape, CD-ROM, DVD or Bluray disc.

## Patentansprüche

1. Verfahren, das von einer Benutzereinrichtung, UE, in einem drahtlosen Kommunikationssystem durchgeführt wird, das Trägeraggregation unterstützt, wobei die UE von einem Zugangsknoten mit einem primären Träger und mindestens einem sekundären Träger konfiguriert wird, und wobei der mindestens eine sekundäre Träger durch den Zugangsknoten auf einer Unterrahmen-für-Unterrahmen-Basis über eine Aktivierungs-/Deaktivierungsanzeige, im Folgenden als Ein-/Aus-Merkmal bezeichnet, dynamisch ein- und ausgeschaltet werden kann, umfassend den Schritt des Empfangens eines Indikators vom Zugangsknoten, der anzeigt, ob das Ein-/Aus-Merkmal für den mindestens einen sekundären Träger verwendet wird oder nicht, derart dass, wenn der Indikator anzeigt, dass das Ein-/Aus-Merkmal nicht verwendet wird, die Aktivierungs-Deaktivierungsanzeige auf einer Unterrahmen-für-Unterrahmen-Basis für den mindestens einen sekundären Träger vom Zugangsknoten ignoriert wird.

2. Verfahren nach Anspruch 1, wobei der Indikator das Ein-/Aus-Merkmal für alle sekundären Zellen anzeigt, die vom Zugangsknoten für die UE konfiguriert sind.

3. Verfahren nach Anspruch 1 oder 2, wobei der Indikator das Ein-/Aus-Merkmal für jede konfigurierte sekundäre Zellen separat anzeigt.

4. Verfahren nach einem der Ansprüche 1 bis 3, wobei der Indikator ein MAC-Steuerelement ist.

5. Verfahren nach Anspruch 2, wobei der Indikator in einem Aktivierungs-/Deaktivierungs-MAC-Element gemäß 3GPP-Standard 36.321 Version 12.1.0 umfasst ist.

6. Verfahren nach einem der Ansprüche 1 bis 3, wobei der Indikator durch die UE vom Zugangsknoten in einer Downlink-Steuerinformations, DCI,-Nachricht auf einem physikalischen Downlink-Steuerkanal, PDCCH, empfangen wird.

7. Zugangsknoten, der in einem drahtlosen Kommunikationssystem umfasst ist, das Trägeraggregation unterstützt, wobei der Zugangsknoten eine Benutzereinrichtung, UE, mit einem primären Träger und mindestens einem sekundären Träger konfiguriert, und wobei der mindestens eine sekundäre Träger durch den Zugangsknoten auf einer Unterrahmen-für-Unterrahmen-Basis über eine Aktivierungs-/Deaktivierungsanzeige, im Folgenden als Ein-/Aus-Merkmal bezeichnet, dynamisch ein- und ausgeschaltet werden kann, umfassend eine Sendeeinheit, die so ausgelegt ist, dass sie auf dem primären Träger einen Indikator an die UE sendet, der anzeigt, ob das Ein-/Aus-Merkmal für den mindestens einen sekundären Träger verwendet wird oder nicht, derart dass, wenn der Indikator anzeigt, dass das Ein-/Aus-Merkmal nicht verwendet wird, die UE angewiesen wird, die Aktivierungs-Deaktivierungsanzeige auf einer Unterrahmen-für-Unterrahmen-Basis für den mindestens einen sekundären Träger vom Zugangsknoten zu ignorieren.

8. Verfahren, das von einem Zugangsknoten in einem drahtlosen Kommunikationssystem durchgeführt wird, das Trägeraggregation umfasst, wobei der Zugangsknoten eine Benutzereinrichtung, UE, mit einem primären Träger und mindestens einem sekundären Träger konfiguriert, und wobei der mindestens eine sekundäre Träger durch den Zugangsknoten auf einer Unterrahmen-für-Unterrahmen-Basis über eine Aktivierungs-/Deaktivierungsanzeige, im Folgenden als Ein-/Aus-Merkmal bezeichnet, dynamisch ein- und ausgeschaltet werden kann, wobei das Verfahren umfasst:
Senden auf dem primären Träger eines Indikators an die UE, der anzeigt, ob das Ein-/Aus-Merkmal für den mindestens einen sekundären Träger verwendet wird oder nicht, derart dass, wenn der Indikator anzeigt, dass das Ein-/Aus-Merkmal nicht verwendet wird, die UE angewiesen wird, die Aktivierungs-Deaktivierungsanzeige auf einer Unterrahmen-für-Unterrahmen-Basis für den mindestens einen sekundären Träger vom Zugangsknoten zu ignorieren.

9. Benutzereinrichtung, die von einem Zugangsknoten eines drahtlosen Kommunikationssystems, das Trägeraggregation unterstützt, mit einem primären Träger und mindestens einem sekundären Träger konfiguriert ist, wobei der mindestens eine sekundäre Träger durch den Zugangsknoten auf einer Unterrahmen-für-Unterrahmen-Basis über eine Aktivierungs-/Deaktivierungsanzeige, im Folgenden als Ein-/Aus-Merkmal bezeichnet, dynamisch ein- und ausgeschaltet werden kann, umfassend eine Empfangseinheit, die so ausgelegt ist, dass sie auf dem primären Träger einen Indikator an die UE empfängt, der anzeigt, ob das Ein-/Aus-Merkmal für den mindestens einen sekundären Träger verwendet wird oder nicht, derart dass, wenn der Indikator anzeigt, dass das Ein-/Aus-Merkmal nicht verwendet wird, die Aktivierungs-Deaktivierungsanzeige auf einer Unterrahmen-für-Unterrahmen-Basis für den mindestens einen sekundären Träger vom Zugangsknoten ignoriert wird.

10. Benutzereinrichtung nach Anspruch 9, die zum Ausführen mindestens eines der Verfahrensschritte nach Anspruch 2 bis 6 ausgelegt ist.

11. Computerprogramm, umfassend Anweisungen, die bei Ausführung auf mindestens einem Prozessor einer Benutzereinrichtung den mindestens einen Prozessor zum Durchführen des Verfahrens nach einem der Ansprüche 1 bis 6 veranlassen.

12. Computerprogrammprodukt, umfassend ein Computerprogramm nach Anspruch 11.

13. Computerlesbarer Datenträger, der das Computerprogramm nach Anspruch 11 darauf gespeichert aufweist, wobei der Datenträger eines von einem elektronischen Signal, einem optischen Signal, einem Funksignal, einem Magnetband, einer CD-ROM, einer DVD oder einer Blu-Ray-Disc ist.

## Revendications

1. Procédé effectué par un équipement d'utilisateur, UE, dans un système de communication sans fil prenant en charge une agrégation de porteuses, dans lequel l'UE est configuré par un nœud d'accès avec une porteuse primaire et au moins une porteuse secondaire, et dans lequel l'au moins une porteuse secondaire peut être dynamiquement activée et désactivée par le nœud d'accès sur une base de sous-trame par sous-trame par l'intermédiaire d'une indication d'activation/désactivation, à laquelle il est fait ci-après référence en tant que caractéristique d'activation/désactivation, comprenant l'étape de la réception d'un indicateur en provenance du nœud d'accès indiquant si la caractéristique d'activation/désactivation est ou non utilisée pour l'au moins une porteuse secondaire, de sorte que, lorsque ledit indicateur indique que la caractéristique d'activation/désactivation n'est pas utilisée, l'indication d'activation/désactivation sur une base de sous-trame par sous-trame soit ignorée pour l'au moins une porteuse secondaire depuis le nœud d'accès.

2. Procédé selon la revendication 1, dans lequel l'indicateur indique la caractéristique d'activation/désactivation pour toutes les cellules secondaires qui sont configurées pour l'UE par le nœud d'accès.

3. Procédé selon la revendication 1 ou 2, dans lequel l'indicateur indique la caractéristique d'activation/désactivation séparément pour chaque cellule secondaire configurée.

4. Procédé selon l'une quelconque des revendications 1 à 3, dans lequel l'indicateur est un élément de commande MAC.

5. Procédé selon la revendication 2, dans lequel l'indicateur est compris dans un élément de commande MAC d'activation/désactivation selon la spécification de la norme 3GPP 36.321 version 12.1.0.

6. Procédé selon l'une quelconque des revendications 1 à 3, dans lequel l'indicateur est reçu par l'UE en provenance du nœud d'accès dans un message d'informations de commande de liaison descendante, DCI, sur un canal de commande de liaison descendante physique, PDCCH.

7. Nœud d'accès compris dans un système de communication sans fil prenant en charge une agrégation de porteuses, dans lequel le nœud d'accès configure un équipement d'utilisateur, UE, avec une porteuse primaire et au moins une porteuse secondaire, et dans lequel l'au moins une porteuse secondaire peut être dynamiquement activée et désactivée par le nœud d'accès sur une base de sous-trame par sous-trame par l'intermédiaire d'une indication d'activation/désactivation, à laquelle il est fait ci-après référence en tant que caractéristique d'activation/désactivation, comprenant une unité d'envoi apte à envoyer, sur la porteuse primaire, à destination de l'UE, un indicateur indiquant si la caractéristique d'activation/désactivation est ou non utilisée pour l'au moins une porteuse secondaire, de sorte que, lorsque ledit indicateur indique que la caractéristique d'activation/désactivation n'est pas utilisée, il soit ordonné à l'UE d'ignorer l'indication d'activation/désactivation sur une base de sous-trame par sous-trame pour l'au moins une porteuse secondaire depuis le nœud d'accès.

8. Procédé effectué par un nœud d'accès dans un système de communication sans fil prenant en charge une agrégation de porteuses, dans lequel le nœud d'accès configure un équipement d'utilisateur, UE, avec une porteuse primaire et au moins une porteuse secondaire, et dans lequel l'au moins une porteuse secondaire peut être dynamiquement activée et désactivée par le nœud d'accès sur une base de sous-trame par sous-trame par l'intermédiaire d'une indication d'activation/désactivation, à laquelle il est fait ci-après référence en tant que caractéristique d'activation/désactivation, le procédé comprenant :
l'envoi, sur la porteuse primaire, à destination de l'UE, d'un indicateur indiquant si la caractéristique d'activation/désactivation est ou non utilisée pour l'au moins une porteuse secondaire, de sorte que, lorsque ledit indicateur indique que la caractéristique d'activation/désactivation n'est pas utilisée, il soit ordonné à l'UE d'ignorer l'indication d'activation/désactivation sur une base de sous-trame par sous-trame pour l'au moins une porteuse secondaire depuis le nœud d'accès.

9. Equipement d'utilisateur, configuré par un nœud d'accès d'un système de communication sans fil prenant en charge une agrégation de porteuses avec une porteuse primaire et au moins une porteuse secondaire, dans lequel l'au moins une porteuse secondaire peut être dynamiquement activée et désactivée par le nœud d'accès sur une base de sous-trame par sous-trame par l'intermédiaire d'une indication d'activation/désactivation, à laquelle il est fait ci-après référence en tant que caractéristique d'activation/désactivation, comprenant une unité de réception apte à recevoir, sur la porteuse primaire, un indicateur, à destination de l'UE, indiquant si la caractéristique d'activation/désactivation est ou non utilisée pour l'au moins une porteuse secondaire, de sorte que, lorsque ledit indicateur indique que la caractéristique d'activation/désactivation n'est pas utilisée, l'indication d'activation/désactivation sur une base de sous-trame par sous-trame soit ignorée pour l'au moins une porteuse secondaire depuis le nœud d'accès.

10. Equipement d'utilisateur selon la revendication 9, apte à effectuer au moins l'une des étapes de procédé selon les revendications 2 à 6.

11. Programme informatique comprenant des instructions qui, lorsqu'elles sont exécutées sur au moins un processeur d'un équipement d'utilisateur, amènent l'au moins un processeur de l'équipement d'utilisateur à effectuer le procédé selon l'une quelconque des revendications 1 à 6.

12. Produit de programme informatique comprenant un programme informatique selon la revendication 11.

13. Support de données lisibles par ordinateur sur lequel est mémorisé le programme informatique selon la revendication 11, dans lequel le support de données est l'un d'un signal électronique, d'un signal optique, d'un signal radio, d'une bande magnétique, d'un CD-ROM, d'un DVD ou d'un disque Blu-ray.
